# EUROPEAN PATENT SPECIFICATION

(11) **EP 3 256 002 B1**
(45) Date of publication and mention of the grant of the patent: **23.09.2020**
(21) Application number: 16715125.7
(22) Date of filing: 08.02.2016
(51) Int. Cl.: A23J 3/14, A23J 3/18, A23L 33/185

(54) **METHOD FOR PREPARING AN AQUEOUS DISPERSION OF A POORLY DISPERSIBLE PLANT PROTEIN**
VERFAHREN ZUR HERSTELLUNG EINER WÄSSRIGEN DISPERSION EINES SCHWER DISPERGIERBAREN PFLANZENPROTEINS
PROCÉDÉ DE PRÉPARATION D'UNE DISPERSION AQUEUSE D'UNE PROTÉINE VÉGÉTALE FAIBLEMENT DISPERSIBLE

(30) Priority: 09.02.2015 EP 15154318
(43) Date of publication of application: 20.12.2017
(73) Proprietor: FrieslandCampina Nederland B.V., 3818 LE Amersfoort (NL)
(72) Inventor: ALTING, Aart Cornelis, 6700 AE Wageningen (NL); LUYTEN, Johanna Maria Jozefa Georgina, 6700 AE Wageningen (NL); WESTERBEEK, Johannes Martinus Maria, 6700 AE Wageningen (NL)
(74) Representative: FrieslandCampina Nederland B.V.
(86) International application number: PCT/NL2016/050090
(87) International publication number: WO 2016/129998

(56) References cited:
- WO-A1-2009/070011
- WO-A2-2008/011516
- WO-A2-2008/143507
- DE-C- 706 115
- US-E- R E32 725
- HUAIQIONG CHEN ET AL: "Processes improving the dispersibility of spray-dried zein nanoparticles using sodium caseinate", FOOD HYDROCOLLOIDS, vol. 35, March 2014 (2014-03), pages 358-366, XP055202386, ISSN: 0268-005X, DOI: 10.1016/j.foodhyd.2013.06.012
- Ashok R. Patel ET AL: "Sodium Caseinate Stabilized Zein Colloidal Particles", Journal of Agricultural and Food Chemistry, vol. 58, no. 23, 8 December 2010 (2010-12-08), pages 12497-12503, XP055355071, US ISSN: 0021-8561, DOI: 10.1021/jf102959b
- PATEL A R ET AL: "Sodium caseinate stabilized zein colloidal particles", JOURNAL OF AGRICULTURAL AND FOOD CHEMISTRY 20101208 AMERICAN CHEMICAL SOCIETY USA, , vol. 58, no. 23 8 December 2010 (2010-12-08), pages 12497-12503, XP002742256, DOI: 10.1021/JF102959B Retrieved from the Internet: URL:http://pubs.acs.org/doi/pdf/10.1021/jf 102959b

## Description

The invention relates to a method for preparing a colloidal aqueous dispersion comprising plant protein.

Plant proteins are an abundant side-product in the production of other useful nutrients, such as oils, digestible carbohydrates and dietary fibre, from plant material. Plant proteins can be grouped on the basis of solubility in liquids: water (albumins), dilute saline solutions (globulins), alcohol:water mixtures (prolamins) and dilute alkali or acid (glutelins). In particular, seeds of certain monocotyledons, such as seeds of grains (cereals and grasses), such as rice, corn, wheat, oat etc. have a high content of proteins that have an intrinsically low solubility in water (at about neutral pH), and that are also poorly dispersible in water, such as prolamins. The low dispersibility in water limits the possibilities to use these proteins in food and other products on an industrial scale. This is not only a drawback if the final product is an aqueous product, but also puts limitations to the processing of the poorly dispersible proteins in order to prepare a useful product from them. For instance, organic liquids may be needed in order to disperse the proteins sufficiently well to process them.

For example, Patel et al ["Sodium caseinate stabilized zein colloidal particles. J. Agric. Food Chem. 58. (2010), 12497-12503] describe a method wherein a colloidal dispersion of zein (a prolamin) is made by antisolvent precipitation using an ethanol/water binary solvent wherein the zein is dissolved. Next, a dispersion is formed by mixing the zein in ethanol/water with an aqueous caseinate preparation. The concentration of zein was relatively low (2.5 % w/v). In order to prepare a stable colloidal dispersion a relatively high amount of caseinate was needed (a ratio zein to caseinate of maximally 1:0.3). It should be noted that milk proteins (such as casein and caseinate) are becoming an increasingly scarce product, as there is a globally increasing demand for dairy products. In particular, it would be desirable to be able to provide a stable colloidal dispersion of a plant protein that is poorly dispersible in water, which does not require the use of an organic solvent and/or to provide protein particles comprising said plant protein that can be stably dispersed in water at a higher concentration than 2.5% w/v.

It is an object of the present invention to provide a satisfactory alternative for proteins presently used in commercial food or feed products or other (consumer) products, in particular for use in a dispersion.

In particular, it is an object of the present invention to make plant protein available for human food applications, which plant protein is present in sources or parts thereof that are currently not used for food production or used for animal feed.

It is in particular an object of the present invention to provide a way to improve dispersibility and/or heat stability of plant proteins in an aqueous medium, to provide particles comprising plant protein having an improved dispersibility in an aqueous fluid, and to provide a product comprising such particles.

It has now been found that one or more of these objects are met by treating particles comprising one or more poorly dispersible plant proteins with a specific technique in the presence of a specific protein obtained from milk.

Accordingly, the invention relates to a method for preparing an aqueous dispersion comprising colloidal protein particles dispersed in an aqueous fluid, which colloidal protein particles comprise caseinate and one or more plant proteins of a seed of a plant from the family of *Poaceae*, the method comprising
a) providing an intermediate dispersion of caseinate and particles comprising said one or more plant proteins in an aqueous fluid; and
b) subjecting the intermediate dispersion to a disruptive pressurization step, comprising treatment in a homogenizer at a pressure of at least 40 MPa,
wherein the particles comprising the one or more plant proteins are disrupted and the aqueous dispersion comprising the colloidal protein particles is formed.

Preferably, the plant protein has a dispersibility in water at 20 °C of 15 % or less, preferably of 10 % or less.

Disclosed is an aqueous colloidal dispersion, preferably a dispersion obtainable by a method according to the invention, comprising colloidal protein particles, the particles comprising a core which is rich in one or more plant proteins and a surface which is rich in caseinate.

Disclosed is a method for preparing hybrid protein particles comprising a core which is rich in one or more plant proteins, and a surface which is rich in caseinate, comprising drying an aqueous dispersion (obtained) according to the invention

Disclosed are hybrid protein particles, preferably obtainable by a method according to the invention, comprising a core at least substantially consisting of one or more plant proteins and which core is at least substantially surrounded with caseinate.

As illustrated by the Examples, the treatment of poorly dispersible plant protein particles with disruptive pressurization in the presence of caseinate, considerably improves dispersibility of the plant protein.

In an advantageous embodiment, the aqueous dispersion according to the invention has an improved heat stability.

Further, the invention provides a means to reduce the need for milk protein, which is becoming increasingly scarce due to a worldwide increasing demand. The hybrid particles can be used to replace milk protein fully or partly. In particular functional capacities of milk protein may be taken over by hybrid particles of the invention. As only a fraction of milk protein (caseinate) is needed, compared to a fully dairy protein based product, the invention offers increased efficiency in providing milk protein substitute.

Dairy proteins are popular because of the high nutritional quality of the protein, which means all nine essential amino acids are available. Plant based proteins are often considered to be of lower nutritional quality - because - depending on the plant based protein source they are depleted in one or more essential amino acids. The hybrid protein particles can complement a low quality plant protein with a high quality dairy protein.

Unless defined otherwise, all technical and scientific terms used herein have the same meaning as commonly understood by one of ordinary skill in the art.

The term "substantial(ly)" or "essential(ly)" is generally used herein to indicate that it has the general character or function of that which is specified. When referring to a quantifiable feature, these terms are in particular used to indicate that it is for at least 75 %, more in particular at least 90 %, even more in particular at least 95 % of the maximum that feature.

The term 'essentially free' is generally used herein to indicate that a substance is not present (below the detection limit achievable with analytical technology as available on the effective filing date) or present in such a low amount that it does not significantly affect the property of the product that is essentially free of said substance or that it is present in such a low amount (trace) that it does not need to be labelled on the packaged product that is essentially free of the substance. In practice, in quantitative terms, a product is usually considered essentially free of a substance, if the content of the substance is 0 - 0.1 wt.%, in particular 0 - 0.01 wt.%, more in particular 0 - 0.005 wt.%, based on total weight of the product in which it is present.

'Caseinate' is a non-micellar protein derived from casein, obtainable by acid precipitation from a liquid containing solubilised casein (casein micelles) such as milk, and subsequent neutralization with a base, such as a hydroxide, e.g. NaOH, KOH,, Mg(OH)₂, Ca(OH)₂, NH₄OH or a basic salt, *e.g.* CaCO₃, Na₂CO₃ or K₂CO₃. and mixtures thereof. The term caseinate also encompasses modified, e.g. glycated or deamidated caseinate. Deamidated caseinate can e.g. be obtained by subjecting caseinate to the deamidating activity of an enzyme e.g. a deamidase or transglutaminase. A part of, or all amide groups of the glutamine and/or asparagine side chains are then deamidated to form carboxyl groups. Like casein, caseinate is composed of a mixture of four major casein types (alpha S1, alpha S2, beta and kappa casein). However, (micellar) casein contains calcium and phosphate bound to the protein structure, stabilizing the micellar structure. Caseinate does not need to contain calcium nor phosphate, although a caseinate preparation may contain calcium or phosphate.

Preferably, the caseinate is caseinate from cow milk. Other suitable sources include milk from other ungulates, in particular milk from hoofed ungulates, such as sheep milk, goat milk, mare, camel and buffalo milk.

As used herein, 'dispersibility' of a substance, in particular of protein particles, is determinable by centrifugation at 1360 g of a 5 wt. % mixture of the substance in water (distilled water or tap water, without further additives) for a duration of 10 min. This test is usually carried out at about 20 °C. The dispersibility of a protein is generally calculated as:
*100* % *x the amount of the nitrogen of the protein that remains in the supernatant divided by the total amount of nitrogen of the protein.*

Protein particles that remain in the supernatant under these test conditions for determining dispersibility are generally colloidal particles.

In particular, for the dispersibility of the plant protein as a constituent of or from the hybrid particles, the dispersibility is determinable as described in the examples. Herein is described how the nitrogen content from plant protein in the supernatant is estimated by correcting the nitrogen content of the supernatant fraction for the caseinate contribution, assuming that the caseinate distributes proportionally over the supernatant and the pellet (residue)) and that the dispersibility of plant protein nitrogen is expressed as a percentage of total plant protein nitrogen.

The protein content can be measured by determining the nitrogen content of the protein, using the Kjeldahl methodology (TKN).

A protein is in particular considered to have a poor (or low) dispersibility if the dispersibility is 15 % or less, preferably 10 % or less, more preferably 5 % or less, in particular 3 % or less. When referred to a dispersibility herein, dispersibility at 20 °C is meant, unless specified otherwise.

Particles have been defined and classified in various different ways depending on their specific structure, size, or composition. As used herein, particles are broadly defined as micro- or nanoscale particles which are typically composed of at least one solid material. Typically, the weight-average diameter of such particles range from approximately 10 nm to approximately 100 µm, as may be determined by microscopy (light microscopy, or electron microscopy, depending on the size, as will be understood by the skilled person).

In the colloidal dispersion, the average particle diameter of the colloidal particles usually is between about 0.01 µm and about 4 µm, in particular between about 0.05 µm and about 2 µm, more in particular about 1.5 µm or less, e.g. about 1 µm or less. Preferably, the average particle diameter is at least 0.1 µm, more preferably of at least 0.2 µm, more preferably at least 0.4 µm, more preferably at least 0.5 µm.

In the colloidal dispersion, the colloidal particles usually have a particle size distribution (D(4,3) as determinable by dynamic light scattering (Malvern Mastersize X analyser), between about 0.01 µm and about 4 µm. In particular, the D(4,3) is at least about 0.05 µm, more in particular at least about 0.1 µm. Preferably, the D(4,3) of the colloidal particles is at least 0.2 µm, more preferably of at least 0.3 µm, more preferably of at least 0.4 µm, more preferably of at least 0.5 µm. Preferably, the D(4,3) of the colloidal particles is about 2 µm or less, in particular about 1 µm or less. In particular good results have been achieved with particles having a D(4,3) in the range of 0.2 to 2 µm, more in particular 0.5 to 1.5 µm.

Particles may have a homogeneous structure or a heterogeneous structure. Homogenous particles generally consist of a material in a single phase (state of matter). Particles with a heterogeneous structure, wherein two or more states of matter (phases) are distinguishable, may be referred to as hierarchical particles. Hierarchical particles in particular include particles comprising an inner core and an outer layer. The outer layer may be formed of a layer of another substance than the core, e.g. the caseinate may form a complex at the surface of the plant protein thereby forming a layer on at least part of the core composed of the plant protein. The layer may essentially cover the core or may be present as patches on parts of the core. The layer may be a mono-layer. It is also possible that the core is at least substantially surrounded by a thicker layer comprising the caseinate, thereby forming a coating or shell or the like.

As used herein "protein particles" are particles which at least substantially consist of one or more proteins. Preferably at least 40 %, more preferably at least 50 %, in particular at least 80 %, more in particular at least 90 %, of the weight of the particles is formed of one or more proteins. Plant protein particles are preferably particles comprising at least 50 %, based on the total weight of the particles of the one or more poorly dispersible plant proteins, in particular at least 80 %, more in particular at least 90 %.

The "protein particles" may be "hybrid protein particles".

"Hybrid protein particles" means particles comprising at least one plant protein as defined herein, in particular at least one poorly dispersible plant protein, as defined herein, and caseinate. In particular, the hybrid particles are hierarchical particles having a core rich in said plant protein or proteins and a surrounding phase, rich in a caseinate. With 'rich in plant protein' is meant in particular that said protein is the most abundant protein in the core, and with 'rich in caseinate' is meant that the concentration of caseinate at the surface is higher than in the core. In a specific embodiment, the hybrid particles have a core which at least substantially consists of the plant protein, and a surrounding layer which at least substantially consists of caseinate. Such layer may be a monolayer of caseinate or a coating having a thickness exceeding the thickness of a monolayer of caseinate. The layer may also be of discontinuous nature, meaning that the layer may not be covering the whole surface of the plant protein (particle), but is present "patchwise".

pII is defined as the apparent pII as measurable with a standard pII electrode, at 20 °C unless specified otherwise.

The term "aqueous" is used herein to describe fluids with water as only or the major solvent. Generally the water content of an aqueous fluid is more than 50 wt. % based on total weight of the solvents (substances that are in the liquid state of matter at 25°C), preferably 80-100 wt. %, more preferably 90-100 wt. %, in particular 95-100 wt. %. Good results have been obtained with a fluid that is essentially free of solvents other than water. If one or more other solvents are present, these are usually GRAS solvents, preferably food-grade solvents. In particular, ethanol may be present in a minor amount. The other solvent, such as ethanol, may be added to facilitate the disruptive pressurization step, e.g. the number of homogenization cycles or the homogenization pressure may be reduced whilst achieving a similar effect. If used, the ethanol content is usually at least 5 wt. %, in particular 10-20 wt. %. Further, in addition to water, an aqueous fluid may comprise an edible oil, such as a triglyceride oil, although good results have been achieved with a fluid that is essentially free of oil.

The individual particles comprising plant protein used as a starting material to make the intermediate dispersion may be composed of a single homogenous material or may be an agglomerate composed of a plurality of smaller particles, such as nanoparticles.

The particles comprising the plant protein, used as a starting material, may at least substantially consist of one or more proteins. However, it is also possible to use particles that comprise a substantial amount of one or more other (plant) components. For instance, a cereal flour can be used. Usually, the protein content of the particles comprising the plant protein is at least about 10 wt. %, in particular about 25 wt. % or more, preferably at least about 40 wt. %, more preferably 50 wt. % or more. However, it is an advantage of the invention that it also allows the preparation of colloidal dispersion from relatively crude protein particles that contain a substantial amount of one or more components other than protein particles, e.g. a carbohydrate or lipid . Thus, in a specific embodiment the protein particles contain less than about 90 wt. % protein, more specifically less than about 80 wt. %. The particles comprising the plant protein are particles comprising a protein from the seeds of a plant from the family of *Poaceae.* Preferably the poorly soluble plant protein is from a grain, more preferably from a cereal or grass selected from the group of rice, oat, wheat, corn, barley, rye and sorghum, even more preferably selected from rice, oat, wheat and corn, most preferred from rice, oat and corn.

In a preferred embodiment, the poorly dispersible plant protein is selected from the group of grain kernel proteins, such as rice kernel protein; bran proteins, such as oat bran protein; gluten particles and prolamins. Preferably, the prolamin is selected from the group of gliadin, hordein, secalin, zein, kafirin and avenin. More preferably, the prolamin is zein.

In the method of the invention, an intermediate dispersion is prepared from the particles comprising the plant protein and the caseinate. The particles comprising the plant protein for the intermediate dispersion can be, but do not need to be colloidal particles; they can comprise larger particles. In general, the particles have a diameter up to 1 mm. The D(4,3) is preferably up to 400 µm, , in particular in the range of 1-200 µm, more in particular in the range of 5-100 µm.

In an advantageous embodiment, an aqueous preparation of the plant protein and a separate aqueous preparation of the caseinate are prepared. The pH of the caseinate preparation is usually chosen above pH 5, in particular in the range of pH 5.5-9, in order to provide a preparation wherein the caseinate is sufficiently solubilized. For the plant protein preparation the pH may be lower than 5, but for practical reasons it is preferred that the pH is also above 5, in particular about the same as for the caseinate preparation. The total protein concentration in said preparations usually is in the range of 1-30 wt. %, in particular in the range of 2-20 wt. %, more in particular in the range of about 3 to about 15 wt. %, e.g. about 12 wt. % or less.

In a preferred embodiment, a preceding disruptive high pressure homogenization step of a dispersion of particles comprising one or more plant proteins and preferably without caseinate in an aqueous fluid is done before step a)

Preferably, the preceding high pressure homogenization step involves a pressure in a range that is the same as the ranges of pressures as described for the homogenization step of the intermediate dispersion of caseinate and particles comprising said one or more plant proteins in an aqueous fluid. In a specific preferred embodiment the pressures in the preceding disruptive high pressure homogenization step is about the same as in step a.

The intermediate dispersion of the particles comprising the plant protein and the caseinate is advantageously prepared by mixing the aqueous preparation of the plant protein and the aqueous preparation of the caseinate. Alternatively, the intermediate dispersion is prepared by blending a powder comprising the plant protein and a powder comprising the caseinate, and mixing the resultant blend with an aqueous liquid.

The temperature at which the intermediate dispersion is prepared can be chosen within wide limits, and usually is in the range of 5-90 °C, preferably in the range of 10-70 °C, in particular in the range of 15-65 °C, more in particular at about ambient temperature or higher. Adequate mixing can be accomplished with (gentle) stirring.

Usually, these preparations are mixed to obtain an intermediate dispersion wherein the weight to weight ratio of said plant protein to caseinate is 1:1 or more. Preferably said weight to weight ratio is at least 3:1, more preferably at least 4:1, in particular at least 5:1, at least 6: 1 or at least 7.1. Usually said weight to weight ratio is 20:1 or less, preferably 15:1 or less, more preferably 12:1 or less, in particular 10:1 or less, more in particular 8:1 or less.

The total protein content of the intermediate dispersion usually is in the range of 1-30 wt. %. Preferably the total protein content is at least 5 wt. %, more preferably at least 8 wt. %, in particular about 10 wt. % or more. Preferably, the total protein content is 25 wt. % or less, more preferably 20 wt. % or less, in particular about 15 wt. % or less, e.g. about 12 wt. % or less.

The total content of the plant proteins that have a poor dispersibility in water, in the intermediate dispersion usually is more than 25 wt. % of the total protein, preferably is at least 50 wt. % of the total protein content in the intermediate dispersion, more preferably at least 65 wt. %, in particular about 80 wt. % or more. The balance is preferably at least substantially formed of caseinate.

The disruptive pressurization typically results in a particle size reduction of the particles comprising the plant protein. The intermediate dispersion, subjected to the disruptive pressurization, usually has a pH above 5. It is contemplated that a pH above 5 contributes to sufficient interaction of the caseinate with the particles comprising the plant protein. In particular, the pII of the intermediate dispersion is in the range of 5.5-9, preferably in the range of 6.0-8, more specifically in the range of 6.3 to 7.5. If desired, the pH is adjusted with an acid, e.g. HCl, or a base e.g. NaOH.

The disruptive pressurization of the intermediate dispersion is carried out in a homogenizer. The applied pressure is 40 MPa or more, preferably 50 MPa or more preferably 75 MPa or more. In particular, good results have been achieved at a pressure of about 100 MPa or more. The upper limit for the pressure is generally defined by the maximum pressure that can be applied by the used pressurization device. Taking into account the known maximum pressure for commercially available homogenizers, in practice the maximum pressure is usually about 500 MPa or less. Good results have been achieved at a considerably lower pressure. In particular, the applied pressure may be 250 MPa or less, more in particular 200 MPa or less.

The pressurization treatment comprises 1 or more cycles, preferably 2 or more cycles, in particular 3 or more cycles , more in particular 5 or more cycles . The number of cycles usually is 15 or less, in particular 10 or less, preferably 6 or less.

The temperature during pressurization is usually less than 100 °C, in particular less than 90 °C, preferably up to 70 °C or up to 60 °C. The pressurization temperature is usually started at about ambient temperature although it can be started at a higher or lower temperature. Typically treatment is started at a temperature in the range of 5-40 °C, in particular 10-30°C. As a consequence of the pressurization, the temperature during the treatment generally increases, also in the presence of active cooling. Usually, the temperature may be allowed to increase to a temperature of 40-90°C, in particular 40-80 °C, more in particular 40-70 °C. Optionally, the resultant colloidal dispersion is cooled actively, in particular to a temperature in the range of about 5 to about 20 °C.

In an advantageous embodiment, the disruptive pressurization is carried out with an energy intensity (energy introduced into the product per volume unit) of at least about 10 MJ/m³ dispersion, preferably at least 25 MJ/m³ dispersion, in particular at least 50 MJ/m³ dispersion. The upper limit is not particularly critical and may e.g. be up to about 2 000MJ/m³ dispersion, preferably about 1 500 MJ/m³ dispersion or less, in particular about 1 000 MJ/m³ dispersion or less, more in particular about 500 MJ/m³ dispersion or less.

Based on experiments conducted by the inventors, it is concluded that during the pressurization step of the intermediate dispersion, the particles comprising the plant protein are disrupted and the aqueous dispersion comprising the colloidal protein particles is formed. Without being bound by theory, the inventors conclude from the conducted experiments that the caseinate interacts with the surface of the particles and at least substantially surrounds the particles after the disruptive pressurization step. Thus, an aqueous colloidal dispersion is provided comprising colloidal protein particles, comprising a core which is rich in one or more plant proteins having a dispersibility in water at 20 °C of 10 % or less and a surface which is rich in caseinate.

The aqueous colloidal dispersion may be used as such, e.g. in the preparation of a beverage or other food product or a feed product, optionally after a dilution step or a concentration step, whereby the colloidal particle concentration is decreased or increased. In an embodiment, the aqueous colloidal dispersion is subjected to a step wherein non-colloidal particles are separated from the colloidal dispersion, before further use. This can be done, e.g. by filtration of centrifugation. Thus, the protein particle content, the poorly dispersible plant protein content and the caseinate content in the aqueous dispersion comprising colloidal protein particles that is obtained does not need to be the same as in the intermediate dispersion from which the dispersion is prepared. The poorly dispersible plant protein concentration in the aqueous dispersion comprising colloidal protein particles generally is at least 0.5 wt. %. Usually said poorly dispersible plant protein concentration in the colloidal dispersion is in the range of 0.5-50 wt. %. In principle, the aqueous colloidal dispersion may be prepared at different protein concentration than the concentration in the final product, in particular a food or feed product, that is prepared with the aqueous colloidal dispersion. In an advantageous embodiment, the aqueous colloidal dispersion is prepared at a protein concentration that is about the same as the protein concentration in the final product. In a first embodiment, the plant protein concentration is in the range of 0.5-2.0 wt. %, based on total weight, which dispersion is particularly suitable for preparing products with a relatively low protein content (typically less than 3 wt. % or less, in particular 0.5-2.0 wt. % total protein, based on total weight of the product). In a second embodiment, the plant protein concentration is in the range of 2.0-5.0 wt. %, based on total weight, which dispersion is particularly suitable for preparing products with an intermediate protein content (typically up to 6.5 wt. %, in particular 3.0-5.0 wt. % total protein, based on total weight of the product). In a third embodiment, the plant protein concentration is 5.0 wt. % or more, in particular in the range of 5.0-15 wt. % based on total weight, which dispersion is particularly suitable for preparing products with a relatively high protein content (usually more than 6.5 wt. % total protein, based on total weight, in particular in the range of 7.0-15 wt. %, based on total weight).

Typically at least a substantial part of the plant protein and the caseinate forms colloidal particles in the aqueous dispersion. Preferably, essentially all of at least the plant protein forms colloidal particles.

An aqueous colloidal dispersion preferably has a weight to weight ratio of the poorly dispersible plant protein to caseinate of 3.5:1 or more, more preferably of 4:1 or more, in particular of 5:1 or more, more in particular 6:1 or more, 7:1 or more, 8:1 or more or 9:1 or more. Said ratio preferably is 20:1 or less - in particular in the range of 4:1 to 20:1- more preferably 15:1 or less, in particular 5:1 to 10:1,

The aqueous colloidal dispersion may be used as such, e.g. in the preparation of a beverage or other food product or a feed product, or isolated hybrid protein particles may be obtained from the colloidal dispersion. The hybrid particles are usually obtained by drying an aqueous dispersion according to the invention. For the drying step, generally known drying techniques, can be used e.g. drum drying, spray drying or freeze-drying. The hybrid particles have improved dispersibility compared to hybrid particles obtained by drying an aqueous fluid comprising plant protein and caseinate that has not been subjected to the disruptive pressurization step. A particularly suitable drying technique is spray drying. Spray drying may in particular be used for obtaining a powder of particles having a core-shell morphology, wherein the core at least substantially consists of the plant protein and the shell at least substantially consists of the caseinate. This technique is generally known in the art and the skilled person will be able to carry out the spray drying based on common general knowledge, the information disclosed herein and optionally a limited amount of routine testing.

One may also use a technique whereby the particles are isolated from the aqueous phase, *e.g*. ultrafiltration, ultracentrifugation, or precipitation.

The (isolated) hybrid protein particles of the invention are preferably a powder.

The weight to weight ratio of the (poorly dispersible) plant protein to caseinate of the isolated particles (such as a powder of the particles) may be about the same as for the aqueous dispersion. However, dependent on the preparation technique, it is also possible to provide particles with a lower weight to weight ratio of the plant proteins to caseinate, for instance because caseinate that is present in the bulk of the dispersion may precipitate on the colloidal particles in the dispersion during drying. The weight to weight ratio of poorly dispersible plant protein to caseinate usually is 1:2 or more, in particular 1:1 or more, more in particular 2:1 or more, preferably 3.5:1 or more, more preferably 4:1 or more, more in particular. 5:1 or more more in particular 6:1 or more, 7:1 or more, 8:1 or more or 9:1 or more.. The ratio usually is 20:1 or less, in particular 15:1 or less, more in particular 10:1 or less.

It is an advantage of the hybrid particles, compared to plant protein particles that lack the caseinate and thus essentially consist of the core material (poorly soluble plant protein particles) that the dispersibility (based on nitrogen determination) in water is improved; the dispersibility in water at 20 °C usually is more than 10 %, preferably 15 % or more, more preferably 20 % or more, in particular about 25 % or more. In principle, the dispersibility may be up to 100 %, at least in specific embodiments. In practice, dispersibility may be less, in particular about 70 % or less, about 65 % or less, about 50 % or less, about 40 % or less, or about 30 % or less.

The dispersion or particles isolated from the dispersion may be used to provide a food product, a feed product or another product, e.g. a healthcare product. The food product is preferably suitable for human consumption. The food or feed product may be a solid product, a semi-solid product, e.g. a gelled product, or a fluid product (at the temperature of its intended consumption). The food or feed product may be packaged as a ready-to-use food product, e.g. a beverage, that can be consumed upon opening the package, or an instant food or feed product.

A product is considered fluid if it can be poured from a filled package, when held diagonally and the outflow opening is held downward. In particular, a product is considered a fluid if the viscosity, as measured with a Brookfield viscometer (spindle 5, 10 rpm, 7°C), is 100 mPa.s or less, more in particular 70 mPa.s or less, more in particular 1-50 mPa.s.

Solid products and semi-solid products are products that are dimensionally stable in the absence of an externally applied force. Semi-solids typically have a softer consistency than (true) solids, i.e. they show rheological flow at a relatively low applied pressure. Semi-solids are typically spoonable, which means that the product can easily be spooned from a plate or a bowl. In particular, examples of semi-solids are gels, mousses and creams, in particular sour cream, whipped cream, ice-cream, and soft curd cheese

The dispersion or particles are particularly suitable for the provision of a drinkable product, such as a soup or a beverage. The food or feed product, in particular drinkable product, may be a ready-to-use product or an instant product.

Preferred food products include dairy food products and substitute dairy food products.

It is an advantageous of the invention that the food or feed products can be heat-treated to improve microbiological quality. Accordingly, the invention also relates to a food product or a feed product that is sterilized, pasteurized or UHT-treated.

Particularly preferred food products are selected from the group of nutritional drinks, milk-like drinks; fermented (milk-like) products, e.g. drink yoghurts; shakes; smoothies; coffee drinks, such as latte-coffee, cappuccino drinks; chocolate and other cocoa-based beverages.

Preferred food products include evaporated milk (EVAP) or sweetened condensed milk (SCM) product *analogues.*

EVAP and SCM *as such* are well known to the skilled person; these are traditional products which are used already for a long time as whiteners for coffee or milk; or may be consumed as such or in diluted form. Since they are often used in hot beverages, improved heat-stability as offered by the invention, is particularly useful. In accordance with the invention, the contents of the analogues are the same or similar to EVAP respectively SCM, with the proviso that at least part, preferably at least a substantial part, in particular essentially all milk protein is substituted with the protein particles of the invention.

EVAP analogue is defined in particular as a liquid, sterilized product comprising about 22-27 % solids, of which about 7 - 11 % sugars, preferably lactose; about 6- 8 % fat; and about 5 - 8 % protein, the protein comprising the colloidal protein particles of the invention.

The fat may be milk fat and/or vegetable fat.

SCM analogue is defined in particular as a liquid sterilized product comprising about 70 -75 % solids; of which about 6 - 10 % fat; about 50-56 % sugars comprising sucrose and lactose; and about 6 - 10 % protein, the protein comprising the colloidal protein particles of the invention.
The fat may be milk fat and/or vegetable fat.

Nutritional drinks are fluid food products which typically have an energy density of at least 30 kcal/100 ml, in particular 50-150 kcal/100 ml, more in particular 60-100 kcal/100 ml. Preferably, the nutritional drink has a higher protein and/or carbohydrate content than cow milk. In addition to protein and carbohydrate the nutritional drink may in principle contain any additional food ingredient, in particular one or more flavours, one or more vitamins, or one or more mineral. In a specific embodiment, the nutritional drink is prepared from (skimmed) milk, to which particles of the invention and optionally one or more other ingredients have been added.

The total protein content of a nutritional drink preferably is at least about 3.6 wt. %. The protein is preferably selected from the group of dairy proteins and plant proteins.

The fat content preferably is at least about 0.5 wt. %. The fat may in particular be selected from vegetable fats and milk fats. The term fat includes solid and liquid fats, in particular solid and liquid triglycerides.

One or more digestible carbohydrates are optionally present. The carbohydrate content usually is 16 wt. % or less, preferably 0.5-12 wt. %. In an embodiment, the nutritional drink is essentially free of carbohydrates. In such embodiment, preferably one or more other natural sweeteners or one or more artificial sweeteners are present.

Examples of carbohydrates are lactose, sucrose, glucose, oligosugars, maltodextrins and starch..

In a specific embodiment, the nutritional drink has an energy density of 70-114 kCal./ml, contains 3.6-7 wt. % protein, 0.5 - 3 wt. % fat, 0.5-16 wt. % digestible carbohydrate.

In a further embodiment, the food product is selected from the group of; toppings; desserts; bakery products; confectionary products; cheese products.

In a further embodiment, the food product is a sports drink.

In a further embodiment, the food product is an infant formula.

In a further embodiment, the food product is a weight management solution.

In a specific preferred embodiment, the food product is a clinical food product, which may be a clinical nutritional drink. Clinical foods are food products for use in enhancing, maintaining or restoring health and/or prevent a disease, prescribed by a health care professional like a physician, nurse, or dietician, and destined for and supplied to persons in need thereof. A clinical nutritional drink preferably has an energy content of more than 65 kcal/100 ml. A high energy density is then in particular preferred because often patients have volume restrictions or find in difficult to consume high volumes of food.

In a further embodiment, the food product is a lactic acid drink.

In a further embodiment, the food product is a food for elderly people (people aged 65 or older) or ill people. in particular a drink or preparation for a drink for elderly or ill people.

In a further embodiment, the food is a yoghurt-type drink.

In a further embodiment, the food product is a meal replacer.

In a further embodiment, the food product is an instant drink powder.

In a further embodiment, the food product is a nutritional bar.

In a further embodiment, the product is an animal feed product or a pet food product. Preferred animal feed products are milk replacers. These may in particular be used in an agricultural setting. Preferred milk replacers for feeding animals are calf milk replacers and milk replacers for piglets.

The invention will now be illustrated by the following examples.

### Example 1:

Several grain protein dispersions comprising either 10 wt. % rice kernel protein powder (RemyPro, Benco), 10 wt. % oat bran protein powder (Proatein, Tate&Lyle) or 10 % corn protein powder (Zein F4400 FG, Flo Chemical) in water were made at 20°C and typically stirred for 3 hours.

Further, a 10 wt. % sodium caseinate powder (EM7 or NaCas S, FrieslandCampina DMV) dispersion in water was made at 20 °C and typically stirred for 3 hours (typical protein contents of the powders were: sodium caseinate ∼92%; rice kernel ∼80-85%; oat bran ∼51-54%; corn protein ∼88-96%).

The dispersions were stored at 5°C until further use.

After storage overnight the dispersion were brought to about 20 °C. Thereafter, intermediate dispersions of grain protein powder and caseinate powder in different ratios grain protein powder-to-caseinate powder were prepared by mixing the two dispersions at different ratios and de-aerated (only corn protein).

Thereafter, the pH of the dispersion was determined and adjusted to a pH in the range of 6-9, if needed.

The dispersions were subjected to a homogenization step using either a Panda (GEA) homogenizer, a bench top Stansted homogenizer or a Stansted twin intensifier high pressure homogenizer, which were operated according to the supplier's instructions. During homogenization, the apparatus was cooled with running tap water and samples were kept on ice. Homogenization conditions ranged from 50-330 MPa for 1-10 cycles.

### Dispersibility

To determine the increase in aqueous dispersibility of the grain protein preparation, samples were diluted to 5 wt. % dry matter (DM) and 45 g dispersion was centrifuged in 50 mL plastic tubes at 1360 g for 10 minutes at 20°C. The amounts of supernatant and pellet were determined by weight. The supernatants were collected for determination of the nitrogen content (according to the Kjeldahl method; corrected for the contribution of casein to the nitrogen content, assuming that caseinate was proportionally distributed over the supernatant and the pellet fraction). To determine the increase in aqueous dispersibility of the grain protein preparation, results obtained for the mixture were expressed relative to total grain nitrogen and compared with those of the grain powder (solely) dispersions treated with homogenization of grain powder in the absence of caseinate and with those of the mixtures of grain powder and caseinate powder that had not been homogenized. The findings of the experiments are summarized in the following table.

| | **Dispersibility grain protein** | | |
|---|---|---|---|
| | **(N_{grain protein} present in supernatant after 10 min 1360 g compared to total amount of grain protein nitrogen)** | | |
| **Grain protein preparation** | Combination high-pressure homogenization & caseinate | **Reference:** Grain protein preparation & high-pressure homogenization, no caseinate | **Reference:** Mixture of grain protein preparation and caseinate, no homogenization |
| **Rice kernel protein** | Up to 45%* | At maximum 5%* | At maximum 5%* |
| **Oat bran protein** | Up to 80%* | At maximum 15%* | At maximum 10%* |
| **Corn protein** | Up to 37%** | At maximum 5%* | At maximum 10%* |

| | | | |
|---|---|---|---|
| *Depending on ratio grain protein/caseinate, homogenization conditions and pII, references at non-adjusted pH. | | | |

In more detail, the following table shows the effect of increasing the pressure and/or the number of cycles in the homogenizer on the dispersibility of **rice kernel protein** (10% DM, ratio rice kernel:caseinate 5:1, pH 7).

| **Pressure [MPa]** | **#cycles** | **Dispersibility grain protein [%]** |
|---|---|---|
| **100** | 10 | 14 |
| **150** | 10 | 45 |

The following Table shows the effect of increasing the pressure and/or the number of cycles in the homogenizer on the dispersibility of **oat bran protein** (10% DM, ratio oat bran:caseinate 20:1, pH 6.3).

| **Pressure [MPa]** | **#cycles** | **Dispersibility grain protein [%]** |
|---|---|---|
| **50** | 1 | 17 |
| **50** | 2 | 24 |
| **50** | 5 | 39 |
| **50** | 10 | 47 |
| **100** | 1 | 28 |
| **100** | 2 | 43 |
| **100** | 5 | 59 |
| **100** | 10 | 63 |
| **50** | 5 | 33 |
| **100** | 5 | 61 |
| **150** | 5 | 66 |

The following table illustrates that increasing the pH from 7 to 8 had a positive effect on the dispersibility of **rice kernel protein** (ratio rice kernel:caseinate 10:1; 150 MPa, 10 cycles, DM 10%), in combination with a disruptive pressurization step.

| **Treatment of dispersion:** | **Dispersibility grain protein at pH 7 [%]** | **Dispersibility grain protein at pH 8 [%]** |
|---|---|---|
| **disruptive pressurization** | 36 | 45 |

The following Table illustrates that varying the ratio of rice kernel: caseinate affects the dispersibility of grain protein (150 MPa, 10 cycles, DM 10%, pH 7).

| **Ratio rice kernel:caseinate** | **Dispersibility grain protein [%]** |
|---|---|
| **10:1** | 36 |
| **5:1** | 45 |
| **1:1** | 40 |

The following Table illustrates that varying the ratio of **oat bran**:caseinate affects the dispersibility of grain protein (100 MPa, 10 cycles, DM 10%, pH 6.3).

| **Ratio oat bran:caseinate** | **Dispersibility grain protein [%]** |
|---|---|
| **20:1** | 63 |
| **10:1** | 80 |

The table below illustrates that applying another type of homogenizer (bench top Stansted homogenizer) able to operate at higher pressures; the disruptive pressurization step is more effective than on a Panda (GEA) homogenizer limited to operation at maximum 150 MPa.

| **Sample** | **Pressure [MPa]** | **#cycles** | **Dispersibility grain protein [%]** |
|---|---|---|---|
| **10% DM, rice kernel:sodium caseinate 5:1, pH 7** | 200 | 5 | 31 |
| **10% DM, oat bran: sodium caseinate 5:1, pH 6.3 turrax-pre-homogenized** | 200 | 1 | 50 |
| **10% DM, oat bran: sodium caseinate 5:1, pH 6.3 turrax-pre-homogenized** | 200 +Microfluidizer option | 1 | 43 |

From the results above it was concluded that it is possible to improve the dispersibility of different grain proteins significantly by a procedure involving casein and a disruptive technology.

### Particle sizes

The table below shows some typical particle sizes measured using a Malvern MastersizerX (Sysmex) operated according to the instruction of the manufacturer. The samples were suspended in the Malvern Hydro 2000G in demi-water (pump at 1500 rpm, stirring at 300 rpm). As can be seen from the table below, the homogenization step resulted in a clear decrease in particle size (average value of 2 series of samples measured in duplicate). Centrifugation at 1360 g resulted in removal of fraction of larger particles resulting in a supernatant fraction containing smaller hybrid particles.

| | Hybrid particles in supernatant | | Hybrid particles after homogenizatio n | | Grain protein homogenized in the absence of caseinate | | Non-homogenized mixture | |
|---|---|---|---|---|---|---|---|---|
| | **D_{3,2} (µm)** | **D_{4,3} (µm)** | **D_{3,2} (µm)** | **D_{4,3} (µm)** | **D_{3,2} (µm)** | **D_{4,3} (µm)** | **D_{3,2} (µm)** | **D_{4.3} (µm)** |
| **Oat bran (10:1, 10* 100 MPa, pH 6.3)** | 0.2 | 0.8 | 0.8 | 4.1 | 8.7 | 13.2 | 56.1 | 254.2 |
| **Rice kernel (5:1, 10* 100 MPa, pH 7)** | 0.3 | 0.5 | 10.2 | 27.7 | 8.9 | 17.9 | 71.8 | 103.7 |

### Heat-stability

A heat stability test on a colloidal dispersion of oat bran-caseinate hybrid particles (oat bran:caseinate 20:1, 10% DM, pH 6.3, 10*100 MPa) compared to oat bran protein homogenized in the absence of caseinate (10% oat bran) and non-homogenized mixture of oat bran and caseinate (20:1) was performed The heat stability test was done at 2.5% DM. The dispersions were kept at 90 °C for 35 min. Thereafter they were centrifuged (10 min centrifugation at 1360 g). The heat stability , expressed as the percentage of protein that remained in the supernatant was determined. The hybrid particles were more heat-stable compared to oat bran homogenized in the absence of caseinate (10% oat bran) and non-homogenized mixture of oat bran and caseinate (20:1). Especially, the hybrid particles of which the larger particles were removed by centrifugation (10 min 1360 g) visually showed no sedimentation after heating.

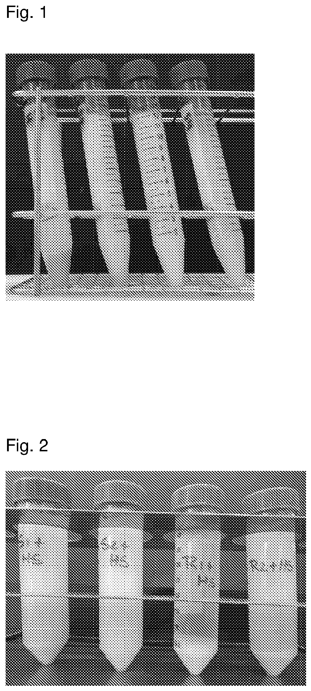

Figure 1 shows pictures of samples heated for 35 min at 90oC, overnight incubated at +4oC (NOT centrifuged). From left to right: non-homogenized mixture of oat bran and caseinate (20:1), homogenized mixture of oat bran and caseinate (20:1), homogenized and centrifuged mixture of oat bran and caseinate (20:1) & oat bran protein homogenized in the absence of caseinate (10% oat bran).

Further, a heat stability test (DM 2.5%, 30 min 90°C) was performed on a colloidal dispersion of rice kernel-caseinate hybrid particles (rice kernel:caseinate 5:1, 10% DM, pH 7, 10*100 MPa) compared to rice kernel protein homogenized in the absence of caseinate (10% rice kernel) and non-homogenized mixture of rice kernel and caseinate (20:1). The heat stability was done at 2.5% DM. It was clearly seen that the hybrid particles were more heat-stable compared to rice kernel homogenized in the absence of caseinate (10% rice kernel) and non-homogenized mixture of rice kernel and caseinate (5:1). Especially, the hybrid particles of which the larger particles were removed by centrifugation (10 min 1360 g) visually showed a little sedimentation after heating. Figure 2 shows a picture of samples heated 30 min at 90°C, centrifuged 1360g 10 min RT. From left to right: homogenized mixture of rice kernel and caseinate (5:1), homogenized and centrifuged mixture of rice kernel and caseinate (5:1), rice kernel protein homogenized in the absence of caseinate (10% rice kernel) & non-homogenized mixture of rice kernel and caseinate (5:1).

The table below shows the heat stability after heating for 30 min at 90°C (2.5% DM), expressed as the percentage of protein that is determined in the supernatant (10 min centrifugation at 1360 g) compared to non-heated samples. It can be clearly seen that for the hybrid particles more protein is kept in the supernatant after heating, indicating that the hybrid particles are more heat-stable than the control samples.

| | **% of protein in supernatant (10 min centrifugation at 1360 g) after heating for 30 min at 90°C (2.5% DM)(compared to non-heated samples)** | |
|---|---|---|
| | **Rice kernel (ratio grain protein: caseinate 5:1, 10% DM, 10*100 MPa) (%)** | **Oat bran (ratio grain protein: caseinate 5:1, 10% DM, 10*100 MPa)(%)** |
| **homogenized mixture of grain protein and caseinate (hybrid particles)** | 25.3 | 46.4 |
| **homogenized and centrifuged mixture of grain protein and caseinate (hybrid particles after centrifugation)** | 86.5 | 84.0 |
| **Grain protein homogenized in the absence of caseinate** | 0.9 | 8.5 |
| **non-homogenized mixture of grain protein and caseinate** | 13.6 | 38.0 |

Stability of heated (2.5% DM; 30 min 90°C) oat-caseinate mixtures (prepared at oat bran: caseinate ratio 10:1, 10%, pH 6.3, 10*100 MPa) and references was also determined using a Turbiscan™ AGS (Formulaction); the tested samples were:
*S1* = *Oat bran:caseinate 10:1, 10% DM, 10* 100 MPa, pH 6.3*
*S2* = *Supernatant of S1 (after centrifugation for 10 min at 1360 g)*
*R1* = *Oat bran:caseinate 10:1 no treatment*
*R2* = *0at bran, 10% DM, 10* 100 MPa, pH 6.3*
*R3* = *10% caseinate*

Measurements were done in cylindrical glass measurement cells. The light source applied was a pulsed near infrared LED. Two synchronous optical sensors received respectively light transmitted through the sample (0° from the incident radiation), and light backscattered by the sample (135° from the incident radiation). The optical reading head scanned the length of the sample, acquiring transmission and backscattering data every 40 µm. The samples were measured every two hours during 26 hours at 30°C. At the start of the Turbiscan measurement, the reference sample *Oat bran:caseinate 10:1 no treatment* (R1), was already phase separated. The other samples were homogeneous at the start of the measurement.

In order to compare the destabilization of the different samples, the Turbiscan Stability Index (TSI) computation was used. The TSI sums up all the variations in the sample, resulting in an unique number reflecting the destabilization of a given sample. The higher the TSI, the stronger the destabilization of the sample.

It was found that the hybrid oat bran-caseinate particles were more stable than the references, non-homogenized mixture of oat bran and caseinate (R1) & homogenized oat bran (R2)(as expected the caseinate solution was stable (R3)). Most stable was S2, the supernatant fraction of the homogenized mixture of oat bran-caseinate. After 22 hours it had a TSI value of 2, compared to 30 for R2, 8 for R1 and 4 for R3.

### Further results for corn protein

In more detail, the following table shows the effect of pH during homogenization on the dispersibility of corn protein (ratio corn protein: caseinate 5:1).

| **Sample description** | **Type of homogenizer** | **Pressure [MPa and #cycles]** | **Dispersibility grain protein [%]** | **D_{4,3} (µm)** | **D_{3,2} (µm)** |
|---|---|---|---|---|---|
| Corn protein & caseinate mixture adjusted at pH 7 (10%DM) | Panda (GEA) homogenizer | 150/10 | 33 | 8.1 | 1.2 |
| Corn protein & caseinate mixture adjusted at pH 7 (5% DM) | Panda (GEA) homogenizer followed by Stansted, twin intensifier high pressure system | 50/1 & 330/5 | 37 | 1.8 | 0.3 |
| Corn protein adjusted at pH 7 | Panda (GEA) homogenizer | 1500/10 | <5 | 58.7 | 0.3 |
| Corn protein & caseinate mixture adjusted at pH 7 | No homogenization | - | <10 | 338.3 | 111.2 |
| Corn protein & caseinate mixture adjusted at pH 8 | Panda (GEA) homogenizer | 1500/10 | 22 | 1.4 | 0.2 |
| Corn protein adjusted at pH 9 | Panda (GEA) homogenizer | 1500/10 | 30 | 1.5 | 0.2 |

- Operator guide, chapter 6, Malvern Mastersize X :D4,3 =volume mean diameter and D3,2 = surface area mean diameter, also known as the Sauter mean.

### Example 2: Dispersing technologies

In this example the influence of different dispersing methods on the production of plant protein dispersions with enhanced stability was tested. Four starting dispersions were produced:
A) 10% oat bran powder, 1% sodium caseinate
B) 10% rice kernel powder, 1% sodium caseinate
C) 10% oat bran powder
D) 10% rice kernel powder

The suspensions were used at their natural pH. Dispersions were subjected to several treatments.

### Spray-drying (comparative example)

Spray-drying was done using a pilot dryer equipped with a Schlick 121 pressure nozzle that was operated using a spraying pressure of 80 bar. Inlet and outlet temperature were 170°C and 70°C respectively. Product temperature was 50°C. Two different variants were produced using dispersion A: 1. The suspension is spray-dried directly 2. The suspension is homogenized at a pressure of 35 MPa before spray-drying After one day of storage the produced powders were dissolved at a concentration of 10%. To properly disperse the powder the solutions were turraxed for 1 minute using an IKA laboratory turrax at 14000 rpm. Subsequently, the solutions were stored overnight at 4°C. The stability of these suspensions was analyzed by first diluting the dispersion by a factor of two and then centrifugation for 10 min at 1360g. Results are given in the table below.

| **Sample** | **Dispersibility [%]** |
|---|---|
| **A-1** | **5** |
| **A-2** | **7** |

### Dispax (comparative example)

Rotor-stator devices are frequently used as dispersing tools. Here we used the IKA "DISPAX" reactor/homogenizer to disperse the dispersions mentioned above.

The suspensions were pumped at 20°C through the Dispax at two speeds (10 L/h and 20 L/h, corresponding with a reference time inside the mixing chamber of about 30 s and 15 s respectively). During Dispax treatment the temperature rose to maximally 60°C. The produced suspensions were analyzed for their stability using the above mentioned centrifugation method. Results are given in the table below.

| **Sample** | **Dispersibility [%**] |
|---|---|
| **A - 10 l/h** | 9% |
| **A-20 l/h** | 5% |
| **B - 10 l/h** | 0% |
| **B - 20 l/h** | 0% |
| **C - 10 l/h** | 9% |
| **C - 20 l/h** | 7% |
| **D - 10 l/h** | 0% |
| **D - 20 l/h** | 0% |

The results show that the Dispax is less effective than repeated high pressure homogenization in producing a stable suspension. This can be explained by the fact that high pressure homogenization generally introduces more energy into the product than a Dispax (10⁸ J/m³ as compared to 10⁷ J/m³).

### Ultrasound (comparative example)

Ultrasound is known to be a very energy intensive method. Typically about 10⁹ J/m³ is added during ultrasound treatment. Tests were performed using the lab-scale Cavitus US set-up with a volume of about 1 L. The US device was filled with product (at 15°C) and US was applied for 2, 4, 8 or 12 min. Each test was done with fresh material. Maximum power was used, corresponding to 900W. During treatment the temperature rose to 25 (2 min), 40 (4 min), 53 (8 min) and 60°C (12 min). The produced suspensions were analyzed for their stability using the above mentioned centrifugation method. Results are given in the table below.

| **Sample** | **Dispersibility [%]** |
|---|---|
| **A - 2 min** | 9% |
| **A - 4 min** | 10% |
| **A - 8 min** | 7 % |
| **A - 12 min** | 9 % |
| **B - 4 min** | 0 % |
| **B - 12 min** | 0 % |

Despite the fact that US treatment is very energy intensive, the stability of the produced suspensions is much lower than that of the suspensions produced using high pressure homogenization (see above). Since sedimenting particles in the US treated samples appeared to be rather voluminous, we speculate that very small plant protein particles were produced that flocculated, which partially undoes the effect of US treatment.

### Colloid mill (comparative example)

Colloid mills work on the rotor-stator principle: a rotor turns at high speeds (2000 - 18000rpm). The resulting high levels of hydraulic shear applied to the process liquid may disrupt structures in the fluid. Samples (A-D) were treated at ambient temperature and maximum speed using an IKA MagicLAB® (equipped with module MK/MKO). As can be seen in the table below no significant effect of the treatment in the presence of caseinate was observed (sample A vs. C and sample B vs. D).

| **Sample** | **Dispersibility [%]** |
|---|---|
| **A** | 11 |
| **B** | 0 |
| **C** | 10 |
| **D** | 1 |

### Microfluidizer (method according to the invention)

Microfluidization is another energy intensive piece of dispersion equipment. Experiments were done using a Microfluidics Model M-110Y Microfluidizer using the z-type disruptor (H30Z) with an internal dimension of 200 micron. Suspensions were passed through the microfluidizer 3 times. At the start of the experiment, suspensions were at room temperature. After microfluidizer treatment the temperature had increased to 30°C or 45°C when using a pressure of 40 MPa.

| **Sample** | **Dispersibility [%]** |
|---|---|
| **A - 40 MPa** | 20 |
| **B - 40 MPa** | 0 |
| **C - 40 MPa** | 9 |
| **D - 40 MPa** | 0 |

The results show that the presence of caseinate increases the stability of the oat suspension.

### Example 3

The following experiment demonstrates that caseinate binds to the plant protein particles during the disruptive step. Hybrid particles of rice kernel protein and caseinate were prepared at a ratio of rice kernel powder: caseinate powder of 5:1, 10% DM, pH 6.9, 10* 100 MPa. Before use, the caseinate solution was centrifuged at 10% DM for 1 h at 100,000 g and subsequently filtrated (2x) through a 0.45µm filter. The 10% DM dispersions of the hybrid particles (homogenized), the non-homogenized mixture of rice kernel powder and caseinate, the rice kernel powder homogenized in the absence of caseinate and the caseinate were diluted to 5% DM and centrifuged for 10 min at 1360 g (20°C).

The supernatants were subsequently filtered through 0.8 µm filters and analyzed on caseinate content using reversed phase HPLC. The table below clearly shows that for the hybrid particles (homogenized mixture of rice kernel and caseinate powder) less caseinate is present in the filtrate compared to the references, non-homogenized mixture and the caseinate solution. This clearly indicates interaction of caseinate protein with rice kernel protein, preventing part of the caseinatee to pass the membrane.

As expected in the filtrate of the homogenized rice kernel powder dispersion, no caseinate or other proteins could be determined in the range of detection. As the casein content in the filtrate of the caseinate reference is in accordance with the estimated value, the selected pore-size (0.8 µm) is completely permeable for caseinate protein.

| | **Caseinates content (%)** |
|---|---|
| **Non-homogenized mixture** | **0.82** |
| **Homogenized mixture (hybrid particles)** | 0.47 |
| **Homogenized rice kernel powder** | Not detected |
| **Caseinate solution** | 0.80 |

### Example 4: Lactic Acid Drink

Hybrid particles prepared from oat bran protein (ratio grain-protein:caseinate = 10:1, 10*1000 bar, pH 6.3) were used to prepare a Lactic Acid Drink (LAD) according to a standard recipe. A dairy-based LAD was used as a reference.

The recipes contained sugar, pectin and acid and were UHT-treated.. The product was evaluated after 1 week storage at 5°C.

The two varieties were found to be visual, physical, and microbiological stable. Composition and pH were well comparable. The taste, texture and mouth feel of all samples was judged to be good.

| **Recipe** | | **REFERENCE Non-flavoured LAD** | **Hybrid-based Non-flavoured LAD** |
|---|---|---|---|
| **Sample** | | 1 | 2 |
| **Milk matrix** | Milk | x | |
| | Cream | | X |
| | Whey Permeate | x | |
| | Hybrid particles | | X |

| **Analvsis** | | | |
|---|---|---|---|
| **Fat** | | 1.02% | 0.28% |
| **Protein** | | 0.59% | 0.72% |
| **pH** | | 4.01 | 3.84 |
| **Colour** | | White | Little beige |
| **Physic-chemical evaluation** | | Stable No serum | Stable No serum |

### Example 5: effect of caseinates vs. micellar casein or milk powder

The following Table shows the performance of other type of casein(ate)s relative to that of sodium caseinate on the dispersibility of both oat bran and rice kernel protein (normalized on sodium caseinate and corrected for the dispersibility in the absence of casein(ate)). Ten homogenization cycles were done at 100 MPa, 10 wt. % dry matter; weight to weight ratio plant protein preparation : casein(ate) 5:1 and pH 6.3 (oat bran) or pH 7 (rice kernel). Performance of sodium caseinate was compared to that of calcium caseinate (Excellion CaCasS, FrieslandCampina DMV; 92.6% protein), micellar casein isolate (MCI 80, Refit, FrieslandCampina DOMO; 80.3% protein), medium heat Skimmed Milk Powder (SMP, 33.1% protein) and deamidated sodium caseinate *. In the experimental set-up, additions of calcium caseinate, MCI and SMP were standardized on protein using caseinate as the reference. Clearly it can be seen that of the different type casein(ate) preparations, (deamidated) sodium caseinates performs best. Calcium caseinate performs better than micellar casein and SMP with oat bran protein.

**Table: dispersibility (normalized on sodium caseinate = 100 %)**

| | **Sodium caseinate** | **Calcium Caseinate** | **SMP** | **MCI** | **Deamidated sodium caseinate** |
|---|---|---|---|---|---|
| **oat bran protein** | 100 | 44 | 5 | 0 | 109 |
| **Rice kernel protein** | 100 | 0 | 0 | 0 | 99 |

| | | | | | |
|---|---|---|---|---|---|
| * Deamidated sodium caseinate was prepared as follows: to a 40% sodium caseinate(EXCELLION EM7, FrieslandCampina DMV) dispersion stirred at 50°C, Protein Glutaminase (Amano) was added at a dosage of 5 units per gram of protein. After 5 h the enzyme was heat-inactivated by heating the dispersion at 90°C for 10 min. After cooling, the material was freeze-dried to obtain a powdered deamidated sodium caseinate prototype. | | | | | |

### Example 6: Effect of pre-homogenisation

A 10% DM aqueous dispersion of oat bran powder was homogenized for 9 cycles at 100 MPa (**R2**). Subsequently, caseinate was added to obtain a ratio grain-protein powder:caseinate powder of 10:1. Next, the batch was divided into 4 equal parts. One part was again homogenized for 1 cycle at 100 MPa (**S1**), to one part a static high pressure treatment was given of 100 MPa (**S2**), one part was heated up to 70°C and kept at that temperature for 1 h (**S3**), the fourth part was not further treated (**S4**). In the table below the dispersibility of the grain protein after the different treated samples is given.

| **Sample** | **Description** | **Plant protein sup/total plant protein (%)** |
|---|---|---|
| **R2** | Homogenized oat (9x 100 MPa) | 9.8 |
| **S1** | Homogenise mixture + 1x 100 MPa | 60.2 |
| **S2** | Mixture in HP unit 5 min 100 MPa | 10.9 |
| **S3** | Mixture at 1 h 70 °C | 9.8 |
| **S4** | Mixture cool < 10 °C | 10.9 |

## Claims

1. Method for preparing an aqueous dispersion comprising colloidal protein particles dispersed in an aqueous fluid, which colloidal protein particles comprise caseinate and one or more plant proteins of a seed of a plant from the family of *Poaceae,* the method comprising
a) providing an intermediate dispersion of caseinate and particles comprising said one or more plant proteins in an aqueous fluid; and
b) subjecting the intermediate dispersion to a disruptive pressurization step comprising treatment in a homogenizer at a pressure of at least 40 MPa, wherein the particles comprising the one or more plant proteins are disrupted and the aqueous dispersion comprising the colloidal protein particles is formed.

2. Method according to claim 1, wherein the weight to weight ratio of said plant protein to caseinate in the intermediate dispersion is in the range of 1:1 to 20:1, preferably in the range of 3:1 to 15:1, in particular in the range of 4:1 to 12:1, more in particular in the range of 5:1 to 10:1.

3. Method according to any or the preceding claims, wherein the protein content of the intermediate dispersion is in the range of 1-30 w. %, in particular in the range of 5-25 wt. %, more in particular in the range of 10-20 wt. %.

4. Method according to any of the preceding claims wherein the content of said one or more plant proteins in the intermediate dispersion is at least 25 wt. %, preferably at least 50 wt. % of the total protein content in the intermediate dispersion, more preferably at least 65 wt. %, in particular at least 80 wt. %.

5. Method according to any of the preceding claims, wherein the pressurization comprises treatment in a homogenizer at a pressure of 50-500 MPa, in particular 100-250 MPa.

6. Method according to any of the preceding claims, wherein the pH during the pressurization is in the range of 5.5-9.0, preferably in the range of 6.0-8.0, in particular in the range of 6.3-7.5.

7. Method according to any of the preceding claims, wherein said one or more plant proteins are of a grain, preferably from a cereal or grass selected from the group of rice, oat, wheat, corn, barley, rye and sorghum, more preferably of a cereal or grass selected from the group of rice, oat, wheat and corn.

8. Method according to claim 7, wherein the one or more plant proteins in the intermediate dispersion are selected from the group of rice kernel proteins, oat bran proteins, gluten particles, and prolamins.

9. Method according to any of the preceding claims, wherein the particles comprising said one or more plant proteins in the intermediate dispersion have a D(4,3) in the range of 1 µm to 1 mm, preferably in the range of 5-400 µm and/or wherein the colloidal particles have a D(4,3) in the range of 0.2 µm to 4 µm, in particular of 0.4 to 2 µm, determined by dynamic light scattering.

## Patentansprüche

1. Verfahren zur Herstellung einer wässrigen Dispersion, die kolloidale Proteinpartikel umfasst, welche in einem wässrigen Fluid dispergiert sind, wobei diese kolloidalen Proteinpartikel Kaseinat sowie ein oder mehrere Pflanzenproteine eines Samens einer Pflanze aus der Familie der *Poaceae* umfassen, wobei das Verfahren Folgendes umfasst
a) Bereitstellen einer Zwischendispersion von Kaseinat und Partikeln, welche das ein oder die mehreren Pflanzenproteine umfassen, in einem wässrigen Fluid; und
b) Einwirkenlassen eines aufbrechenden Druckbeaufschlagungsschritts auf die Zwischendispersion, wobei dieser eine Behandlung in einem Homogenisator bei einem Druck von mindestens 40 MPa umfasst, wobei die Partikel, welche das ein oder die mehreren Pflanzenproteine umfassen, aufgebrochen werden und die wässrige Dispersion, welche die kolloidalen Proteinpartikel umfasst, gebildet wird.

2. Verfahren gemäß Anspruch 1, wobei das Gewichtsverhältnis des Pflanzenproteins zum Kaseinat in der Zwischendispersion im Bereich von 1:1 bis 20:1, vorzugsweise im Bereich von 3:1 bis 15:1, insbesondere im Bereich von 4:1 bis 12:1, ganz besonders im Bereich von 5:1 bis 10:1 liegt.

3. Verfahren gemäß einem beliebigen der vorhergehenden Ansprüche, wobei der Proteingehalt der Zwischendispersion im Bereich von 1 bis 30 Gew.-%, insbesondere im Bereich von 5 bis 25 Gew.-%, ganz besonders im Bereich von 10 bis 20 Gew.-% liegt.

4. Verfahren gemäß einem beliebigen der vorhergehenden Ansprüche, wobei der Gehalt an dem einen oder den mehreren Pflanzenproteinen in der Zwischendispersion mindestens 25 Gew.-%, vorzugsweise mindestens 50 Gew.-% des Gesamtproteingehalts in der Zwischendispersion, stärker bevorzugt mindestens 65 Gew.-%, insbesondere mindestens 80 Gew.-% beträgt.

5. Verfahren gemäß einem beliebigen der vorhergehenden Ansprüche, wobei die Druckbeaufschlagung eine Behandlung in einem Homogenisator bei einem Druck von 50 bis 500 MPa, insbesondere von 100 bis 250 MPa umfasst.

6. Verfahren gemäß einem beliebigen der vorhergehenden Ansprüche, wobei der pH-Wert während der Druckbeaufschlagung im Bereich 5,5 bis 9,0, vorzugsweise im Bereich von 6,0 bis 8,0, insbesondere im Bereich von 6,3 bis 7,5 liegt.

7. Verfahren gemäß einem beliebigen der vorhergehenden Ansprüche, wobei das eine oder die mehreren Pflanzenproteine aus einem Korn stammen, insbesondere aus einem Getreide oder Gras, das aus der Gruppe von Reis, Hafer, Weizen, Mais, Gerste, Roggen und Hirse ausgewählt ist, insbesondere aus einem Getreide oder Gras, das aus der Gruppe von Reis, Hafer, Weizen und Mais ausgewählt ist.

8. Verfahren gemäß Anspruch 7, wobei das eine oder die mehreren Pflanzenproteine in der Zwischendispersion aus der Gruppe von Reiskornproteinen, Haferkleieproteinen, Glutenpartikeln und Prolaminen ausgewählt sind.

9. Verfahren gemäß einem beliebigen der vorhergehenden Ansprüche, wobei die Partikel, welche das eine oder die mehreren Pflanzenproteine umfassen, in der Zwischendispersion einen D(4,3) im Bereich von 1 µm bis 1 mm, vorzugsweise im Bereich von 5 bis 400 µm haben und/oder wobei die kolloidalen Partikel einen D(4,3) im Bereich von 0,2 µm bis 4 µm, insbesondere von 0,4 bis 2 µm haben, bestimmt mittels dynamischer Lichtstreuung.

## Revendications

1. Méthode de préparation d'une dispersion aqueuse comprenant des particules protéiques colloïdales dispersées dans un fluide aqueux, lesquelles particules protéiques colloïdales comprennent des caséinates et une ou plusieurs protéines végétales d'une graine issue d'une plante de la famille des Poaceae, la méthode comprenant les étapes consistant à :
a) mettre à disposition une dispersion intermédiaire de caséinates et de particules comprenant lesdites une ou plusieurs protéines végétales dans un fluide aqueux ; et
b) soumettre la dispersion intermédiaire à une étape de pressurisation de désagrégation comprenant un traitement dans un homogénéisateur à une pression d'au moins 40 MPa, où les particules comprenant les une ou plusieurs protéines végétales sont désagrégées et la dispersion aqueuse comprenant les particules protéiques colloïdales est formée.

2. Méthode selon la revendication 1, dans laquelle le rapport pondéral desdites protéines végétales aux caséinates dans la dispersion intermédiaire se trouve dans la plage allant de 1:1 à 20:1, préférablement dans la plage allant de 3:1 à 15:1, en particulier dans la plage allant de 4:1 à 12:1, plus particulièrement dans la plage allant de 5:1 à 10:1.

3. Méthode selon l'une quelconque des revendications précédentes, dans laquelle la teneur en protéine de la dispersion intermédiaire se trouve dans la plage de 1-30% en poids, en particulier dans la plage de 5-25% en poids, plus particulièrement dans la plage de 10-20% en poids.

4. Méthode selon l'une quelconque des revendications précédentes, dans laquelle la teneur en lesdites une ou plusieurs protéines végétales dans la dispersion intermédiaire constitue au moins 25% en poids, préférablement au moins 50% en poids, de la teneur en protéine totale dans la dispersion intermédiaire, plus préférablement au moins 65% en poids, en particulier au moins 80% en poids.

5. Méthode selon l'une quelconque des revendications précédentes, dans laquelle la pressurisation comprend un traitement dans un homogénéisateur à une pression de 50-500 MPa, en particulier de 100-250 MPa.

6. Méthode selon l'une quelconque des revendications précédentes, dans laquelle le pH lors de la pressurisation se trouve dans la plage de 5,5-9,0, préférablement dans la plage de 6,0-8,0, en particulier dans la plage de 6,3-7,5.

7. Méthode selon l'une quelconque des revendications précédentes, dans laquelle lesdites une ou plusieurs protéines végétales sont issues d'un grain, préférablement d'une céréale ou d'une graminée choisie dans le groupe constitué par le riz, l'avoine, le blé, le maïs, l'orge, le seigle et le sorgo, plus préférablement d'une céréale ou d'une graminée choisie dans le groupe constitué par le riz, l'avoine, le blé, et le maïs.

8. Méthode selon la revendication 7, dans laquelle les une ou plusieurs protéines végétales dans la dispersion intermédiaire sont choisies dans le groupe constitué par les protéines de réserve du riz, les protéines du son d'avoine, les particules de gluten, et les prolamines.

9. Méthode selon l'une quelconque des revendications précédentes, dans laquelle les particules comprenant lesdites une ou plusieurs protéines végétales dans la dispersion intermédiaire possèdent une D(4,3) dans la plage allant de 1 µm à 1 mm, préférablement dans la plage de 5-400 µm et/ou où les particules colloïdales possèdent une D(4,3) dans la plage allant de 0,2 µm à 4 µm, en particulier allant de 0,4 à 2 µm, déterminée par diffusion dynamique de la lumière.
